# FASCICULE DE BREVET EUROPEEN

(11) **EP 4 136 394 B1**
(45) Date de publication et mention de la délivrance du brevet: **19.02.2025**
(21) Numéro de dépôt: 21713028.5
(22) Date de dépôt: 23.03.2021
(51) Int. Cl.: F25J 1/00, F25J 1/02, F17C 9/00

(54) **INSTALLATION DE STOCKAGE DE GAZ LIQUÉFIÉ**
FLÜSSIGGASSPEICHERANLAGE
LIQUEFIED GAS STORAGE FACILITY

(30) Priorité: 17.04.2020 FR 2003881
(43) Date de publication de la demande: 22.02.2023
(73) Titulaire: L'Air Liquide, Société Anonyme pour l'Etude et l'Exploitation des Procédés Georges Claude, 75007 Paris (FR)
(72) Inventeur: LAGOUTTE, François, 38360 SASSENAGE (FR); BERNHARDT, Jean-Marc, 38360 SASSENAGE (FR); NICOLAS, Rémi, 38360 SASSENAGE (FR)
(74) Mandataire: Air Liquide
(86) Numéro de dépôt international: PCT/EP2021/057357
(87) Numéro de publication internationale: WO 2021/209231

(56) Documents cités:
- CN-A- 106 196 883
- FR-A1- 3 084 135
- GB-A- 1 145 846
- JP-A- 2005 083 588
- US-A- 3 302 416
- US-A- 3 375 675
- US-A1- 2006 065 014
- US-B1- 6 336 331

## Description

L'invention concerne une installation de stockage de gaz liquéfié en particulier d'hydrogène liquide.

L'invention concerne plus particulièrement une installation de stockage de gaz liquéfié, notamment d'hydrogène liquide, comprenant un réservoir de gaz liquéfié destiné à contenir du gaz sous forme liquide et une phase gazeuse, un dispositif de refroidissement du contenu du réservoir, le dispositif de refroidissement comprenant au moins un premier réfrigérateur à cycle de réfrigération d'un gaz de cycle, ledit premier réfrigérateur comprenant, disposés en série dans un circuit de cycle : un organe de compression du gaz de cycle, un organe de refroidissement du gaz de cycle, un organe de détente du gaz de cycle et un organe de réchauffage du gaz de cycle détendu, le dispositif de refroidissement comprenant une première boucle de fluide caloporteur comprenant une première extrémité en échange thermique avec une extrémité froide du premier réfrigérateur et une seconde extrémité comprenant un premier échangeur de chaleur situé dans le réservoir, la première boucle de fluide caloporteur comprenant un organe de circulation du fluide caloporteur. Une telle installation est connue par exemple de US-A-3302416 et US2006/0065014A1.

L'invention peut concerner en particulier une installation de stockage de gaz liquéfié en particulier d'hydrogène liquide transporté, notamment par bateau. Ainsi, l'invention peut concerner également un bateau comprenant une telle installation. L'invention concerne notamment un système permettant le stockage d'hydrogène liquide sur une longue durée, en tenant compte des phases de remplissage et de soutirage, sans perte par évaporation et mettant en œuvre des technologies minimisant le nombre d'équipements et la maintenance nécessaire.

Le transport de fluide cryogénique, notamment d'hydrogène liquide en grandes quantités est amené à se développer, notamment par voie maritime, pour des voyages pouvant durer plusieurs semaines.

Pour les grands réservoirs (plusieurs milliers de m3), les entrées thermiques cumulées génèrent une évaporation significative de la cargaison. Ceci provoque une montée en pression. Cette problématique est similaire à celle rencontrée sur les cuves de méthaniers.

En effet, une telle installation est sujette aux phénomènes suivants :
une évaporation importante lors d'une phase de remplissage du réservoir due à l'arrivée du liquide sur des parois relativement chaudes,
des entrées thermiques naturelles notamment en phase de transport à plein ou à vide,
une chute de pression lors des phases de soutirage.

Une partie des vapeurs peut être utilisée à des fins de production d'énergie (via une pile à combustible), mais une solution permettant de recondenser ces vapeurs ou d'annuler l'évaporation est préférable.

Le document US3302416 décrit une telle installation dans laquelle la phase liquide du gaz naturel est pompée et amenée en échange thermique avec un échangeur de chaleur de refroidissement à l'intérieur d'une enceinte close abritant l'échangeur de chaleur.

Cette solution permet de refroidir la phase liquide du réservoir mais ne permet pas une régulation satisfaisante de la pression dans le réservoir pendant les phases de remplissage.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que le premier échangeur de chaleur est configuré pour être en échange de chaleur direct avec l'intérieur du réservoir, c'est-à-dire que le premier échange de chaleur est configuré pour être en échange de chaleur direct avec le fluide qui l'entoure dans le réservoir, et en ce que la seconde extrémité de la première boucle de fluide caloporteur comprend un second échangeur de chaleur raccordé en parallèle au premier échangeur de chaleur, le second échangeur de chaleur étant situé dans la partie inférieure du réservoir et étant configuré pour être en échange de chaleur direct avec l'intérieur du réservoir, c'est-à-dire que l'échangeur est configuré pour être en échange de chaleur direct avec le fluide qui l'entoure dans le réservoir.

Par ailleurs, des modes de réalisation de l'invention peuvent comporter l'une ou plusieurs des caractéristiques suivantes :
- le premier échangeur de chaleur est situé dans la partie supérieure du réservoir,
- la première boucle de fluide caloporteur comprend un système de vanne(s) de régulation du débit de fluide caloporteur dans le premier échangeur de chaleur et/ou dans le second échangeur de chaleur,
- l'organe de circulation comprend un compresseur ou une pompe de type cryogénique,
- le fluide caloporteur contient de l'hélium et/ou de l'hydrogène,
- la première extrémité de la première boucle de fluide caloporteur est en échange thermique avec une extrémité froide du premier réfrigérateur au niveau d'un échangeur de chaleur assurant un échange de chaleur à contre-courant entre le fluide caloporteur et le gaz de cycle du premier réfrigérateur,
- l'installation comprend une ligne d'alimentation en fluide à liquéfier destinée à être reliée à une source de gaz, ladite ligne étant en échange thermique avec le gaz de cycle du premier réfrigérateur, ladite ligne débouchant de préférence dans le réservoir,
- l'installation comprend une ligne de liquide cryogénique en échange thermique avec l'organe de refroidissement du gaz de cycle pour réchauffer ledit liquide,
- le dispositif de refroidissement comprend un second réfrigérateur à cycle de réfrigération d'un gaz de cycle, ledit second réfrigérateur comprenant, disposés en série dans un circuit de cycle : un organe de compression du gaz de cycle, un organe de refroidissement du gaz de cycle, un organe de détente du gaz de cycle et un organe de réchauffage du gaz de cycle détendu, l'installation comprenant un système d'échange de chaleur entre le gaz de cycle du second réfrigérateur et le gaz de cycle du premier réfrigérateur,
- le système d'échange de chaleur entre le gaz de cycle du second réfrigérateur à cycle de réfrigération et le gaz de cycle du premier réfrigérateur à cycle de réfrigération comprend une seconde boucle de fluide caloporteur comprenant une première extrémité en échange de chaleur avec une portion du circuit de cycle du second réfrigérateur, et une seconde extrémité en échange de chaleur avec une portion du circuit de cycle du premier réfrigérateur,
- la première extrémité de la seconde boucle de fluide caloporteur est en échange de chaleur avec une portion du circuit de cycle du second réfrigérateur au niveau d'au moins un échangeur de chaleur, la seconde extrémité de la seconde boucle de fluide caloporteur étant en échange de chaleur avec une portion du circuit de cycle du premier réfrigérateur au niveau d'au moins un échangeur de chaleur,
- la seconde boucle de fluide caloporteur comporte un organe de circulation du fluide caloporteur tel qu'une pompe.

D'autres particularités et avantages apparaîtront à la lecture de la description ci-après, faite en référence aux figures dans lesquelles :
[Fig. 1] représente une vue schématique et partielle illustrant un premier exemple de structure et de fonctionnement de l'installation selon l'invention,
[Fig. 2] représente une vue schématique et partielle illustrant un deuxième exemple de structure et de fonctionnement de l'installation selon l'invention.

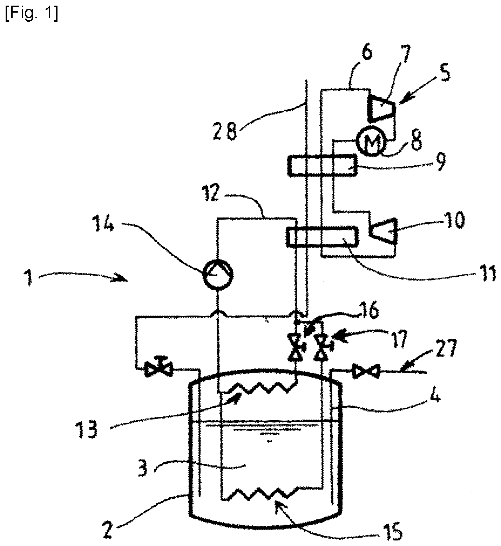

L'installation 1 de stockage de gaz liquéfié (notamment d'hydrogène liquide) représentée à la [Fig. 1] comprend un réservoir 2 de gaz liquéfié destiné à contenir du gaz sous forme liquide 3 en partie inférieure et une phase 4 gazeuse en partie supérieure. L'installation 1 comprend un dispositif de refroidissement du contenu du réservoir 2 permettant ainsi d'y réguler la pression.

Ce dispositif de refroidissement comprend un réfrigérateur 5 à cycle de réfrigération d'un gaz de cycle. Ce gaz de cycle contient de préférence de l'hélium et/ou de l'hydrogène et/ou du néon et/ou de l'azote et/ou tout autre gaz approprié.

Ce réfrigérateur 5 comporte, disposés en série dans un circuit 6 de cycle : un organe 7 de compression du gaz de cycle (tel qu'un ou plusieurs compresseurs), un organe 8, 9 de refroidissement du gaz de cycle (par exemple un ou plusieurs échangeurs de chaleur), un organe 10 de détente du second gaz de cycle (une ou plusieurs turbine ou vanne) et un organe 11, 9 de réchauffage du gaz de cycle détendu (par exemple un ou plusieurs échangeurs de chaleur).

Par exemple, ce réfrigérateur 5 est configuré pour produire du froid à une température entre 15K et 25K, ainsi qu'une pression motrice suffisante pour assurer la circulation du gaz de cycle dans le circuit 6 de cycle.

De préférence, le gaz de cycle réalise dans ce réfrigérateur 5 un cycle thermodynamique dit de Brayton inversé. De préférence, le ou les compresseurs 7 sont de type centrifuge (et les turbines du type centripète) et présentent la particularité de fonctionner sans huile. Selon un mode de réalisation, la/les turbines 10 peuvent être assemblées sur le même arbre que le compresseur 7 afin de récupérer l'énergie.

Le dispositif de refroidissement comprend en outre une boucle 12 de fluide caloporteur comprenant une première extrémité en échange thermique avec une extrémité froide 11 du premier réfrigérateur et une seconde extrémité comprenant au moins un premier échangeur 13 de chaleur situé dans le réservoir 2. Cette boucle 12 de fluide caloporteur comprend un organe 14 de circulation du fluide caloporteur, par exemple un compresseur ou une pompe cryogénique.

Ce fluide caloporteur peut comprendre de l'hélium et/ou de l'hydrogène par exemple.

Ce cycle de refroidissement du réfrigérateur 5 peut être une combinaison de plusieurs cycles en cascade. Par exemple un premier cycle utilisant un mélange d'azote, d'hélium et/ou de néon, suivi d'un deuxième cycle contenant de l'hélium et/ou de l'hydrogène

Cette pompe 14 (ou compresseur cryogénique) est configurée pour fonctionner à ces très basses températures et ne nécessite de préférence aucune huile ni graisse pour son fonctionnement.

La première extrémité de la boucle 12 de fluide caloporteur est en échange thermique avec une extrémité froide du premier réfrigérateur par exemple au niveau d'un échangeur 11 de chaleur assurant un échange de chaleur à contre-courant entre le fluide caloporteur et le gaz de cycle refroidi et détendu du premier réfrigérateur 5.

Dans l'exemple représenté, l'installation 1 comprend deux échangeurs 13, 15 de chaleur dans le réservoir 2, un en partie haute et un en partie basse.

Bien entendu, une configuration avec un seul de ces échangeurs 13, 15 (ou condenseurs) peut être prévue.

De même, il est possible de prévoir plusieurs échangeurs 13 de chaleur supérieurs et/ou plusieurs échangeurs 15 de chaleur inférieurs (notamment en cas de réservoir 2 de très grandes dimensions).

Les deux échangeurs 13, 15 de chaleur peuvent être reliés en parallèle à la seconde extrémité de la boucle 12 de fluide caloporteur. La boucle 12 de fluide caloporteur comprend de préférence un système de vanne(s) 16, 17 de régulation permettant de contrôler le débit de fluide caloporteur dans le premier échangeur 13 de chaleur et/ou dans le second échangeur 15 de chaleur.

Le ou les échangeurs 13, 15 sont en échange de chaleur direct avec le fluide à l'intérieur du réservoir 2, c'est-à-dire ces échangeurs assurent un échange de chaleur direct avec le fluide qui les entoure du réservoir 2. C'est-à-dire que le ou les échangeurs 13, 15 sont immergés directement dans les phases liquide ou gazeuse de fluide stocké dans le réservoir 2.

Ceci permet un échange de chaleur efficace entre le fluide caloporteur et le fluide dans le réservoir 2 sans nécessiter de pompe et circuit de transfert avec carter à l'intérieur du réservoir 2.

Le réservoir 2 est configuré pour contenir par exemple une quantité déterminée d'hydrogène liquide, en intégrant des équipements permettant de réguler la pression du liquide, afin de supprimer les pertes par évaporation. Le réservoir 2 peut être de n'importe quel type (à membrane, à sphère ou autre). Il comprend notamment au moins une ligne 27 de remplissage et/ou de soutirage.

Ainsi, en cas de pression trop élevée dans le réservoir 2 par rapport à une consigne déterminée, le fluide caloporteur peut être mis en circulation dans l'échangeur 13 de chaleur supérieur à une température inférieure au point de rosée du fluide du réservoir 2. Ceci a pour effet de recondenser les vapeurs et faire retomber la pression dans le réservoir 2.

Le fluide caloporteur peut également être admis à circuler dans l'échangeur 15 inférieur à une température inférieure à la température du liquide dans le réservoir 2.

Ce cycle secondaire peut être une combinaison de plusieurs cycles en cascade. Par exemple un premier cycle utilisant un mélange d'azote, d'hélium et/ou de néon, suivi d'un deuxième cycle contenant de l'hélium et/ou de l'hydrogène

De même, selon un mode de réalisation, le fluide caloporteur peut être mis en circulation dans l'échangeur 15 de chaleur inférieur à une température supérieure à la température du liquide contenu dans le réservoir 2. Ceci permet d'évaporer une partie du liquide et de rehausser la pression dans le réservoir 2. Ce mode opératoire peut notamment être utilisé lorsque l'on souhaite soutirer du liquide du réservoir 2 par différentiel de pression.

Ainsi, l'installation 1 permet d'utiliser soit l'échangeur de chaleur 13 supérieur pour réchauffer la phase gazeuse, soit l'échangeur de chaleur 15 inférieur pour évaporer du liquide, afin de faire monter en pression le réservoir.

Pour augmenter la température du fluide caloporteur, le réfrigérateur 5 peut par exemple être commuté dans un mode dans lequel il permet d'atteindre une température cible du liquide caloporteur (arrêt, mode dégradé, notamment rotation en sens inverse d'un compresseur ou turbine).

L'installation 1 permet de minimiser le nombre de modules nécessaire pour remplir les fonctions (pas de système de déshuilage, pas de stockage tampon gazeux).

Comme illustré à la [Fig. 1], le réfrigérateur 5 peut être utilisé en plus pour refroidir et liquéfier un flux de fluide destiné à alimenter, par exemple, le réservoir 2. Ainsi, une ligne 28 alimentée en fluide à liquéfier (à partir d'une source gazeuse par exemple) peut être prévue et peut être en échange thermique avec les échangeurs 9, 10 de chaleur du réfrigérateur 5 et peut déboucher dans le réservoir 2.

L'échangeur 9 de chaleur peut également être alimenté par un fluide extérieur, par exemple les gaz de vaporisation (boil-off) d'un réservoir cryogénique installé à proximité du système.

Ainsi un fluide cryogénique tiers (liquide notamment) peut également être réchauffé dans le ou les échangeurs 9 de chaleur du réfrigérateur 5. Par exemple, lorsque l'installation est située sur un bateau par exemple, il est possible de réutiliser les vapeurs froides d'une cuve voisine (boil off par exemple) dont on peut récupérer les frigories.

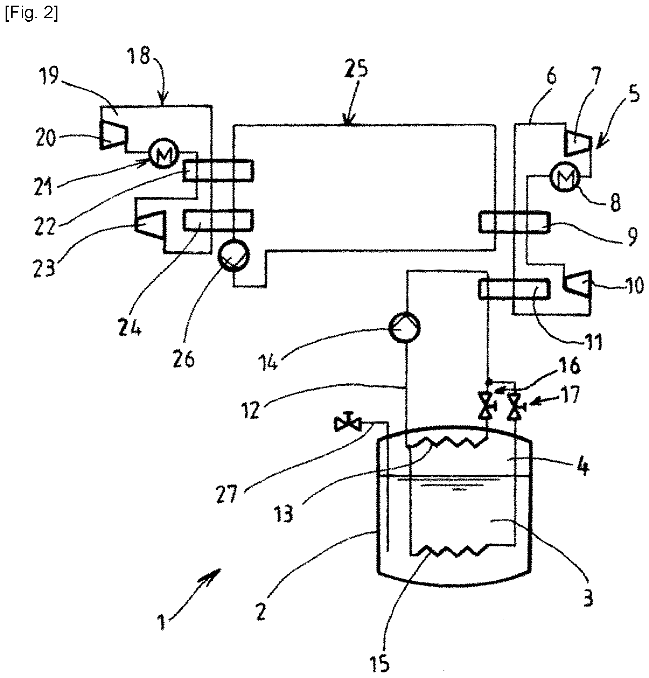

Dans le mode de réalisation de la [Fig. 2], le dispositif de refroidissement comprend un second réfrigérateur 18 à cycle de réfrigération d'un gaz de cycle. Ce second réfrigérateur 18 comprend, disposés en série dans un circuit 19 de cycle : un organe 20 de compression du gaz de cycle, un organe 21, 22 de refroidissement du gaz de cycle, un organe 23 de détente du gaz de cycle et un organe 24 de réchauffage du gaz de cycle détendu. La structure peut être du même type que pour le premier réfrigérateur 5 décrit ci-dessus.

L'installation 1 comprend un système 9, 25 d'échange de chaleur entre le gaz de cycle du second réfrigérateur 18 et le gaz de cycle du premier réfrigérateur 5 à cycle.

Ce système d'échange de chaleur comprend de préférence une seconde boucle 25 de fluide caloporteur comprenant une première extrémité en échange de chaleur avec une portion du circuit 19 de cycle du second réfrigérateur 18, et une seconde extrémité en échange de chaleur avec une portion 9 du circuit 6 de cycle du premier réfrigérateur 5.

La première extrémité de la seconde boucle 25 de fluide caloporteur peut être en échange de chaleur avec une portion du circuit 19 de cycle du second réfrigérateur 18 au niveau d'au moins un échangeur de chaleur 22, 24 du réfrigérateur 18 (par exemple à contre-courant avec le gaz de cycle de ce second réfrigérateur 18). La seconde extrémité de la seconde boucle 25 de fluide caloporteur peut être en échange de chaleur avec une portion 9 du circuit 6 de cycle du premier réfrigérateur 5, au niveau d'au moins un échangeur de chaleur 11, 9 (par exemple à contre-courant du gaz de cycle).

Ce second réfrigérateur 18 peut ainsi être prévu pour assurer un pré-refroidissement du gaz de cycle du premier réfrigérateur 5.

Ce gaz de cycle du second réfrigérateur 18 peut comprendre, par exemple, un mélange d'azote, d'hélium et/ou de néon. Le fluide caloporteur peut comprendre par exemple : de l'azote, de l'hélium et/ou du néon, ou tout autre gaz ou mélange de gaz approprié.

Bien entendu, le système d'échange de chaleur entre le gaz de cycle du second réfrigérateur et le gaz de cycle du premier réfrigérateur n'est pas limité à l'exemple ci-dessus. Ainsi, par exemple il peut être envisagé tout autre échange thermique entre les deux réfrigérateurs et notamment un échange de chaleur direct entre les deux réfrigérateurs.

## Revendications

1. Installation de stockage de gaz liquéfié, notamment d'hydrogène liquide, comprenant un réservoir (2) de gaz liquéfié destiné à contenir du gaz sous forme liquide (3) et une phase (4) gazeuse, un dispositif de refroidissement du contenu du réservoir (2), le dispositif de refroidissement comprenant au moins un premier réfrigérateur (5) à cycle de réfrigération d'un gaz de cycle, ledit premier réfrigérateur (5) comprenant, disposés en série dans un circuit (6) de cycle : un organe (7) de compression du gaz de cycle, un organe (8, 9) de refroidissement du gaz de cycle, un organe (10) de détente du gaz de cycle et un organe (11, 9) de réchauffage du gaz de cycle détendu, le dispositif de refroidissement comprenant une première boucle (12) de fluide caloporteur comprenant une première extrémité en échange thermique avec une extrémité froide (11) du premier réfrigérateur et une seconde extrémité comprenant un premier échangeur (13) de chaleur situé dans le réservoir (2), la première boucle (12) de fluide caloporteur comprenant un organe (14) de circulation du fluide caloporteur, **caractérisée en ce que** le premier échangeur (13) de chaleur est configuré pour être en échange de chaleur direct avec l'intérieur du réservoir (2), c'est-à-dire que le premier échangeur (13) de chaleur est configuré pour être en échange de chaleur direct avec le fluide qui l'entoure dans le réservoir (2) et **en ce que** la seconde extrémité de la première boucle (12) de fluide caloporteur comprend un second échangeur (15) de chaleur raccordé en parallèle au premier échangeur (13) de chaleur, le second échangeur (15) de chaleur étant situé dans la partie inférieure du réservoir (2) et étant configuré pour être en échange de chaleur direct avec l'intérieur du réservoir (2), c'est-à-dire que l'échangeur est configuré pour être en échange de chaleur direct avec le fluide qui l'entoure dans le réservoir (2).

2. Installation selon la revendication 1, **caractérisée en ce que** le premier échangeur (13) de chaleur est situé dans la partie supérieure du réservoir (2).

3. Installation selon la revendication 2, **caractérisée en ce que** la première boucle (12) de fluide caloporteur comprend un système de vanne(s) (16, 17) de régulation du débit de fluide caloporteur dans le premier échangeur (13) de chaleur et/ou dans le second échangeur (15) de chaleur.

4. Installation selon l'une quelconque des revendications 1 à 3, **caractérisée en ce que** l'organe (14) de circulation comprend un compresseur ou une pompe de type cryogénique.

5. Installation selon l'une quelconque des revendications 1 à 4, **caractérisée en ce que** le fluide caloporteur contient de l'hélium et/ou de l'hydrogène.

6. Installation selon l'une quelconque des revendications 1 à 5, **caractérisée en ce que** l'organe de réchauffage comprend un échangeur de chaleur (11) et que la première extrémité de la première boucle (12) de fluide caloporteur est en échange thermique avec une extrémité froide du premier réfrigérateur au niveau de l' échangeur (11) de chaleur assurant un échange de chaleur à contre-courant entre le fluide caloporteur et le gaz de cycle du premier réfrigérateur.

7. Installation selon l'une quelconque des revendications 1 à 6, **caractérisée en ce qu'**elle comprend une ligne (28) d'alimentation en fluide à liquéfier destinée à être reliée à une source de gaz, ladite ligne (28) étant en échange thermique avec le gaz de cycle du premier réfrigérateur (5), ladite ligne (28) débouchant de préférence dans le réservoir (2).

8. Installation selon l'une quelconque des revendications 1 à 7, **caractérisée en ce qu'**elle comprend une ligne de liquide cryogénique en échange thermique avec l'organe (8, 9) de refroidissement du gaz de cycle pour réchauffer ledit liquide

9. Installation selon l'une quelconque des revendications 1 à 8, **caractérisée en ce que** le dispositif de refroidissement comprend un second réfrigérateur (18) à cycle de réfrigération d'un gaz de cycle, ledit second réfrigérateur (18) comprenant, disposés en série dans un circuit (19) de cycle : un organe (20) de compression du gaz de cycle, un organe (21, 22) de refroidissement du gaz de cycle, un organe (23) de détente du gaz de cycle et un organe (24) de réchauffage du gaz de cycle détendu, l'installation (1) comprenant un système (9, 25) d'échange de chaleur entre le gaz de cycle du second réfrigérateur (18) et le gaz de cycle du premier réfrigérateur (5) .

10. Installation selon la revendication 9, **caractérisée en ce que** le système d'échange de chaleur entre le gaz de cycle du second réfrigérateur (18) à cycle de réfrigération et le gaz de cycle du premier réfrigérateur (5) à cycle de réfrigération comprend une seconde boucle (25) de fluide caloporteur comprenant une première extrémité en échange de chaleur avec une portion du circuit (19) de cycle du second réfrigérateur (18), et une seconde extrémité en échange de chaleur avec une portion (9) du circuit (6) de cycle du premier réfrigérateur.

11. Installation selon la revendication 10, **caractérisée en ce que** 1'organe de réchauffage du second réfrigérateur comprend au moins un échangeur de chaleur (22,24) et que la première extrémité de la seconde boucle (25) de fluide caloporteur est en échange de chaleur avec une portion du circuit (19) de cycle du second réfrigérateur (18) au niveau de l' au moins un échangeur de chaleur (22, 24) et **en ce que** l'organe de réchauffage du premier réfrigérateur comprend au moins un autre échangeur de chaleur (9) et que la seconde extrémité de la seconde boucle (25) de fluide caloporteur est en échange de chaleur avec une portion (9) du circuit (6) de cycle du premier réfrigérateur au niveau de l' au moins un autre **échangeur de** chaleur (9).

12. Installation selon la revendication 10 ou 11, **caractérisée en ce que** la seconde boucle (25) de fluide caloporteur comporte un organe (26) de circulation du fluide caloporteur tel qu'une pompe.

## Patentansprüche

1. Anlage zum Speichern von verflüssigtem Gas, insbesondere Flüssigwasserstoff, umfassend einen Tank (2) für verflüssigtes Gas, in dem Gas in flüssiger Form (3) und einer Gasphase (4) aufgenommen werden soll, eine Vorrichtung zum Kühlen des Inhalts des Tanks (2), wobei die Kühlvorrichtung mindestens ein erstes Kühlgerät (5) mit einem Kühlkreislauf eines Kreislaufgases umfasst, wobei das erste Kühlgerät (5) in Reihe in einem Kreislauf (6) angeordnet, Folgendes umfasst: ein Element (7) zur Kompression des Kreislaufgases, ein Element (8, 9) zum Kühlen des Kreislaufgases, ein Element (10) zum Entspannen des Kreislaufgases und ein Element (11, 9) zum Erwärmen des entspannten Kreislaufgases, wobei die Kühlvorrichtung eine erste Wärmeträgermedium-Schleife (12) umfasst, die ein erstes Ende im Wärmeaustausch mit einem kalten Ende (11) des ersten Kühlgeräts und ein zweites Ende umfasst, das einen ersten Wärmetauscher (13) umfasst, der sich im Tank (2) befindet, wobei die erste Wärmeträgermedium-Schleife (12) ein Element (14) für die Zirkulation des Wärmeträgermediums umfasst, **dadurch gekennzeichnet, dass** der erste Wärmetauscher (13) so ausgelegt ist, dass er im direkten Wärmeaustausch mit dem Inneren des Tanks (2) steht, der erste Wärmetauscher (13) also so ausgelegt ist, dass er im direkten Wärmeaustausch mit dem Fluid steht, von dem er im Tank (2) umgeben ist, und dadurch, dass das zweite Ende der ersten Wärmeträgermedium-Schleife (12) einen zweiten Wärmetauscher (15) umfasst, der parallel zum ersten Wärmetauscher (13) angeschlossen ist, wobei sich der zweite Wärmetauscher (15) im unteren Teil des Tanks (2) befindet und so ausgelegt ist, dass er im direkten Wärmeaustausch mit dem Inneren des Tanks (2) steht, der Wärmetauscher also so ausgelegt ist, dass er im direkten Wärmeaustausch mit dem Fluid steht, von dem er im Tank (2) umgeben ist.

2. Anlage nach Anspruch 1, **dadurch gekennzeichnet, dass** sich der erste Wärmetauscher (13) im oberen Teil des Tanks (2) befindet.

3. Anlage nach Anspruch 2, **dadurch gekennzeichnet, dass** die erste Wärmeträgermedium-Schleife (12) ein Ventilsystem (16, 17) zur Durchflussregelung des Wärmeträgermediums im ersten Wärmetauscher (13) und/oder im zweiten Wärmetauscher (15) umfasst.

4. Anlage nach einem der Ansprüche 1 bis 3, **dadurch gekennzeichnet, dass** das Zirkulationselement (14) einen Kryoverdichter oder eine Kryopumpe umfasst.

5. Anlage nach einem der Ansprüche 1 bis 4, **dadurch gekennzeichnet, dass** das Wärmeträgermedium Helium und/oder Wasserstoff enthält.

6. Anlage nach einem der Ansprüche 1 bis 5, **dadurch gekennzeichnet, dass** das Element zum Erwärmen einen Wärmetauscher (11) umfasst und dass das erste Ende der ersten Wärmeträgermedium-Schleife (12) im Bereich des Wärmetauschers (11) im Wärmeaustausch mit einem kalten Ende des ersten Kühlgeräts steht und so für einen Wärmeaustausch im Gegenstrom zwischen dem Wärmeträgermedium und dem Kreislaufgas des ersten Kühlgeräts sorgt.

7. Anlage nach einem der Ansprüche 1 bis 6, **dadurch gekennzeichnet, dass** sie eine Leitung (28) zum Zuführen von zu verflüssigendem Fluid umfasst, die an eine Gasquelle angeschlossen werden soll, wobei die Leitung (28) im Wärmeaustausch mit dem Kreislaufgas des ersten Kühlgeräts (5) steht, wobei die Leitung (28) vorzugsweise in den Tank (2) mündet.

8. Anlage nach einem der Ansprüche 1 bis 7, **dadurch gekennzeichnet, dass** sie eine Kryoflüssigkeitsleitung im Wärmeaustausch mit dem Element (8, 9) zum Kühlen des Kreislaufgases umfasst, damit die Flüssigkeit erwärmt wird.

9. Anlage nach einem der Ansprüche 1 bis 8, **dadurch gekennzeichnet, dass** die Kühlvorrichtung ein zweites Kühlgerät (18) mit einem Kühlkreislauf eines Kreislaufgases umfasst, wobei das zweite Kühlgerät (18) in Reihe in einem Kreislauf (19) angeordnet, Folgendes umfasst: ein Element (20) zur Kompression des Kreislaufgases, ein Element (21, 22) zum Kühlen des Kreislaufgases, ein Element (23) zum Entspannen des Kreislaufgases und ein Element (24) zum Erwärmen des entspannten Kreislaufgases, wobei die Anlage (1) ein System (9, 25) zum Wärmeaustausch zwischen dem Kreislaufgas des zweiten Kühlgeräts (18) und dem Kreislaufgas des ersten Kühlgeräts (5) umfasst.

10. Anlage nach Anspruch 9, **dadurch gekennzeichnet, dass** das System zum Wärmeaustausch zwischen dem Kreislaufgas des zweiten Kühlgeräts (18) mit Kühlkreislauf und dem Kreislaufgas des ersten Kühlgeräts (5) mit Kühlkreislauf eine zweite Wärmeträgermedium-Schleife (25) umfasst, die ein erstes Ende zum Wärmeaustausch mit einem Abschnitt des Kreislaufs (19) des zweiten Kühlgeräts (18) und ein zweites Ende zum Wärmeaustausch mit einem Abschnitt (9) des Kreislaufs (6) des ersten Kühlgeräts umfasst.

11. Anlage nach Anspruch 10, **dadurch gekennzeichnet, dass** das Element zum Erwärmen des zweiten Kühlgeräts mindestens einen Wärmetauscher (22, 24) umfasst und dass das erste Ende der zweiten Wärmeträgermedium-Schleife (25) im Wärmeaustausch mit einem Abschnitt des Kreislaufs (19) des zweiten Kühlgeräts (18) im Bereich des mindestens einen Wärmetauschers (22, 24) steht und dadurch, dass das Element zum Erwärmen des ersten Kühlgeräts mindestens einen weiteren Wärmetauscher (9) umfasst und dass das zweite Ende der zweiten Wärmeträgermedium-Schleife (25) im Wärmeaustausch mit einem Abschnitt (9) des Kreislaufs (6) des ersten Kühlgeräts im Bereich der mindestens einen weiteren Wärme (9) steht.

12. Anlage nach Anspruch 10 oder 11, **dadurch gekennzeichnet, dass** die zweite Wärmeträgermedium-Schleife (25) ein Element (26) für die Zirkulation des Wärmeträgermediums wie eine Pumpe aufweist.

## Claims

1. Installation for storing liquefied gas, in particular liquid hydrogen, comprising a liquefied gas reservoir (2) intended to contain gas in liquid form (3) and a gaseous phase (4), a device for cooling the contents of the reservoir (2), the cooling device comprising at least one first refrigerator (5) with a cycle of refrigeration of a cycle gas, said first refrigerator (5) comprising, disposed in series in a cycle circuit (6): a member (7) for compressing the cycle gas, a member (8, 9) for cooling the cycle gas, a member (10) for expanding the cycle gas and a member (11, 9) for heating the expanded cycle gas, the cooling device comprising a first heat transfer fluid loop (12) comprising a first end in heat exchange with a cold end (11) of the first refrigerator and a second end comprising a first heat exchanger (13) situated in the reservoir (2), the first heat transfer fluid loop (12) comprising a member (14) for circulating the heat transfer fluid, **characterized in that** the first heat exchanger (13) is configured to be in direct heat exchange with the inside of the reservoir (2), i.e. the first heat exchanger (13) is configured to be in direct heat exchange with the fluid that surrounds it in the reservoir (2) and **in that** the second end of the first heat transfer fluid loop (12) comprises a second heat exchanger (15) connected in parallel to the first heat exchanger (13), the second heat exchanger (15) being situated in the lower part of the reservoir (2) and being configured to be in direct heat exchange with the inside of the reservoir (2), i.e. the exchanger is configured to be in direct heat exchange with the fluid that surrounds it in the reservoir (2).

2. Installation according to Claim 1, **characterized in that** the first heat exchanger (13) is situated in the upper part of the reservoir (2).

3. Installation according to Claim 2, **characterized in that** the first heat transfer fluid loop (12) comprises a system of one or more valves (16, 17) for regulating the flow rate of heat transfer fluid in the first heat exchanger (13) and/or in the second heat exchanger (15).

4. Installation according to any one of Claims 1 to 3, **characterized in that** the circulation member (14) comprises a compressor or a pump of the cryogenic type.

5. Installation according to any one of Claims 1 to 4, **characterized in that** the heat transfer fluid contains helium and/or hydrogen.

6. Installation according to any one of Claims 1 to 5, **characterized in that** the heating member comprises a heat exchanger (11) and **in that** the first end of the first heat transfer fluid loop (12) is in heat exchange with a cold end of the first refrigerator at the heat exchanger (11) ensuring a counter-current heat exchange between the heat transfer fluid and the cycle gas of the first refrigerator.

7. Installation according to any one of Claims 1 to 6, **characterized in that** it comprises a line (28) for supplying fluid to be liquefied that is intended to be connected to a gas source, said line (28) being in heat exchange with the cycle gas of the first refrigerator (5), said line (28) preferably opening into the reservoir (2) .

8. Installation according to any one of Claims 1 to 7, **characterized in that** it comprises a line of cryogenic liquid in heat exchange with the member (8, 9) for cooling the cycle gas so as to heat said liquid.

9. Installation according to any one of Claims 1 to 8, **characterized in that** the cooling device comprises a second refrigerator (18) with a cycle of refrigeration of a cycle gas, said second refrigerator (18) comprising, disposed in series in a cycle circuit (19): a member (20) for compressing the cycle gas, a member (21, 22) for cooling the cycle gas, a member (23) for expanding the cycle gas and a member (24) for heating the expanded cycle gas, the installation (1) comprising a system (9, 25) for heat exchange between the cycle gas of the second refrigerator (18) and the cycle gas of the first refrigerator (5).

10. Installation according to Claim 9, **characterized in that** the system for heat exchange between the cycle gas of the second refrigerator (18) with a refrigeration cycle and the cycle gas of the first refrigerator (5) with a refrigeration cycle comprises a second heat transfer fluid loop (25) comprising a first end in heat exchange with a portion of the cycle circuit (19) of the second refrigerator (18), and a second end in heat exchange with a portion (9) of the cycle circuit (6) of the first refrigerator.

11. Installation according to Claim 10, **characterized in that** the heating member of the second refrigerator comprises at least one heat exchanger (22, 24) and **in that** the first end of the second heat transfer fluid loop (25) is in heat exchange with a portion of the cycle circuit (19) of the second refrigerator (18) at the at least one heat exchanger (22, 24) and **in that** the heating member of the first refrigerator comprises at least one other heat exchanger (9) and **in that** the second end of the second heat transfer fluid loop (25) is in heat exchange with a portion (9) of the cycle circuit (6) of the first refrigerator at the at least one other heat (9) .

12. Installation according to Claim 10 or 11, **characterized in that** the second heat transfer fluid loop (25) comprises a member (26) for circulating the heat transfer fluid such as a pump.
